# EUROPÄISCHE PATENTANMELDUNG

(11) **EP 3 748 814 A1**
(43) Veröffentlichungstag der Anmeldung: **09.12.2020**
(21) Anmeldenummer: 19179050.0
(22) Anmeldetag: 07.06.2019
(51) Int. Cl.: H02K 1/16, H02K 3/12, H02K 15/06

(54) **STATOR FÜR EINE ROTIERENDE ELEKTRISCHE MASCHINE**

(71) Anmelder: Siemens Aktiengesellschaft, 80333 München (DE)
(72) Erfinder: Sabelfeld, Ilja, 10119 Berlin (DE); Centner, Matthias, 10555 Berlin (DE)

(57) **Zusammenfassung**

Die Erfindung betrifft einen Stator (2) für eine rotierende elektrische Maschine (EM) mit mehreren Statorsegmenten (2.1, 2.2) und einer Wicklung (4), die ein axiales Ineinanderschieben der Statorsegmente (2.1, 2.2) ermöglicht. Die Erfindung betrifft weiterhin eine rotierende elektrische Maschine (EM) und ein Verfahren zur Montage eines Stators (2).

## Beschreibung

Die Erfindung betrifft einen Stator für eine rotierende elektrische Maschine. Die Erfindung betrifft weiterhin eine rotierende elektrische Maschine mit einem solchen Stator sowie ein Verfahren zur Montage eines derartigen Stators.

Statoren sind als Bestandteil von rotierenden elektrischen Maschinen aus dem Stand der Technik bekannt. Eine elektrisch leitende Wicklung eines Stators einer rotierenden elektrischen Maschine wird häufig als so genannte Zweischichtwicklung ausgeführt. Unter einer Zweischichtwicklung versteht man eine Drehstromwicklung, die zweilagig durch jede Nut eines sogenannten Statorblechpakets geführt ist, wobei durch jede Nut nutgrundseitig eine so genannte Wicklungsunterlage und nutöffnungsseitig eine so genannte Wicklungsoberlage der Statorwicklung verläuft.

Die Drehstromwicklung wird entweder als eine so genannte Spulenwicklung oder als eine so genannte Stabwicklung ausgeführt. Beispielsweise weist eine Zweischicht-Stabwicklung so genannte Roebelstäbe auf, die jeweils nur einen Leiter mit mehreren verdrillten, zueinander parallel geschalteten Teilleitern aufweisen und in der Wicklungsunterlage oder Wicklungsoberlage durch eine Nut verlaufen. Eine Zweischicht-Stabwicklung weist daher eine Leiterzahl von Zwei auf.

Bei Elektromotoren mit einem großen Statorblechpaket-Außendurchmesser, z. B. größer als 5 m, kann aus verschiedenen Gründen eine Segmentierung des Statorblechpakets erforderlich sein. Beispielsweise ist eine Segmentierung notwendig, wenn eine Größe und ein Gewicht des Elektromotors eine vorhandene Krankapazität überschreitet. Des Weiteren kann eine Segmentierung erforderlich sein, wenn ein Platzbedarf eines einteiligen Stators in einer Imprägniertränke einer sogenannten VPI Anlage (Vacuum Pressure Impregnation), in welcher ein Prozessschritt zur Herstellung einer Hochspannungsisolierung durchgeführt wird, zu groß ist oder ein Transport des Stators nur in segmentierter Form möglich ist. Die einzelnen Statorsegmente können anschließend an einem Einsatzort der elektrisch rotierenden Maschine zusammengesetzt werden.

Die Segmentierung des Stators bedingt notwendigerweise eine Segmentierung der Wicklung. Dies stellt bei einer Zweischicht-Spulenwicklung jedoch ein Problem hinsichtlich segmentübergreifender Wicklungselemente dar, da hierbei Stabstirnseiten insbesondere tangential über eine Längsseite eines Statorsegments ragen, was ein Ineinanderführen der Statorsegmente in axialer Form verhindert, so dass ein Zusammensetzen insbesondere von schwergewichtigen Statorsegmenten nur schwer möglich ist.

EP 3 118 973 A1 offenbart eine rotierende elektrische Maschine, die einen Stator und einen Rotor umfasst. Der Stator weist Spulenschlitze auf, die in einem Stator- Eisenkern angeordnet sind, und eine als Zweischichtwicklung ausgebildete Spulenwicklung, die in den Spulenschlitzen angeordnet ist. Die Spulenwicklung umfasst mehrere Spulen mit jeweils einer an einer äußeren Umfangsseite in den Spulenschlitzen angeordneten unteren Spule und einer an einer inneren Umfangsseite in den Spulenschlitzen angeordneten oberen Spule. Die untere und die obere Spule sind dabei endseitig in eine radiale Richtung gebogen, wobei ein Abstand von dem gebogenen Endbereich der oberen Spule zur Spulenschlitzseite länger ist als ein Abstand von dem gebogenen Endbereich der unteren Spule zur Spulenschlitzseite.

Der Erfindung liegt die Aufgabe zugrunde, einen gegenüber dem Stand der Technik verbesserten Stator, eine rotierende elektrische Maschine sowie ein Verfahren zur Montage eines derartigen Stators anzugeben.

Hinsichtlich des Stators wird die Aufgabe erfindungsgemäß mit den in Anspruch 1 angegebenen Merkmalen gelöst. Hinsichtlich der rotierenden elektrischen Maschine wird die Aufgabe erfindungsgemäß mit den in Anspruch 8 angegebenen Merkmalen gelöst. Hinsichtlich des Verfahrens wird die Aufgabe erfindungsgemäß mit den in Anspruch 9 angegebenen Merkmalen gelöst.

Vorteilhafte Ausgestaltungen der Erfindung sind Gegenstand der Unteransprüche.

Ein erfindungsgemäßer Stator für eine rotierende elektrische Maschine umfasst ein Blechpaket, das eine Mehrzahl von miteinander verbundenen Statorsegmenten aufweist, die sich jeweils von einer ersten Stirnseite zu einer der ersten Stirnseite gegenüberliegenden zweiten Stirnseite des Blechpakets erstrecken, und eine elektrisch leitende Wicklung, welche als eine Zweischicht-Stabwicklung ausgebildet ist und welche eine Wicklungsoberlage und eine Wicklungsunterlage aufweist. Die Wicklungsoberlage umfasst eine Mehrzahl von elektrisch leitfähigen Oberstäben. Die Wicklungsunterlage umfasst eine Mehrzahl von elektrisch leitfähigen Unterstäben. Dabei weist jedes Statorsegment eine Mehrzahl von sich in eine axiale Richtung erstreckenden Nuten auf, wobei in jeder Nut ein Oberstab und ein Unterstab in einer radialen Richtung nebeneinander angeordnet sind, insbesondere mittels eines Abstandshalters getrennt übereinander angeordnet sind, und an jeder Stirnseite des Blechpakets mit jeweils einem Stirnseitenbereich aus der Nut in axialer Richtung heraus ragen, und wobei mindestens ein Oberstab eines Statorsegments mit einem Unterstab eines benachbarten Statorsegments mittels eines Verbindungselements elektrisch leitend verbunden ist.

Der derart ausgebildete Stator ermöglicht den Bau großer elektrischer rotierender Maschinen mit größeren axialen Längen gegenüber konventionellen Maschinen. Dies ist insbesondere durch die Konfiguration der Wicklung begründet, bei welcher jeweils Oberstab und Unterstab axial aus der Nut herausragen. Somit kann die Wicklung entsprechend einer Anzahl der Statorsegmente ebenfalls segmentiert werden, ohne dass dabei Wicklungselemente, d. h. Oberstab und/oder Unterstab, über parallel zu einer Längsachse des Stators verlaufende Längsseiten der einzelnen Statorsegmente hinausragen.

Daraus resultierend können die Statorsegmente vor der Montage bereits mit einem Wicklungsabschnitt versehen werden, wobei Ober- und Unterstäbe in einem segmentübergreifenden Bereich, also in einem Bereich an und nahe einer Fügestelle, noch nicht mittels eines Verbindungselements elektrisch leitend verbunden sind. Dies ermöglicht es, dass die Wicklung oder die Wicklungsabschnitte nicht über die Längsseite des entsprechenden Statorsegments hinausragt, so dass ein einfaches und sicheres Zusammensetzen der Statorsegmente möglich ist.

Die Ober- und Unterstäbe, welche nicht in einem segmentübergreifenden Bereich angeordnet sind, werden bereits vor dem Zusammensetzen der Statorsegmente mittels des Verbindungselementes elektrisch leitend miteinander verbunden, wobei hierbei Ober- und Unterstäbe, die in demselben Statorsegment angeordnet sind, elektrisch leitend miteinander verbunden werden. Die mit den Wicklungssegmenten versehenen Statorsegmente können anschließend in einem Isolierbad getränkt und damit imprägniert werden. Der segmentierte Stator ermöglicht somit eine vollimprägnierte isolierte Wicklung.

Eine Ausgestaltung der Erfindung sieht vor, dass jedes Verbindungselement ein freies Ende eines Oberstabs mit einem freien Ende eines in Umfangsrichtung zu diesem Oberstab versetzten Unterstabs elektrisch leitend verbindet. In einer möglichen Ausführungsform weist jedes Verbindungselement einen Schrägabschnitt auf, welcher zwei zu diesem abgewinkelte Enden miteinander verbindet, wobei das eine Ende jedes Verbindungselements mit dem freien Ende eines Unterstabs und das andere Ende jedes Verbindungselements mit dem freien Ende eines Oberstabs elektrisch leitend verbunden ist. Das derart ausgebildete Verbindungselement ermöglicht es, den Oberstab und Unterstab auf einem möglichst kurzen Weg elektrisch leitend miteinander zu verbinden. Beispielsweise ist das Verbindungselement als ein Verbindungsbügel ausgebildet, wodurch dieses einfach und mechanisch stabil mit dem Ober- und Unterstab verbindbar ist. Daraus resultiert in vorteilhafter Weise auch ein einfaches elektrisches Verbinden der Ober- und Unterstäbe im segmentübergreifenden Bereich nach dem Zusammensetzen der Statorsegmente.

Bei einer möglichen Ausführungsform der Wicklung sind an wenigstens einer Stirnseite des Blechpakets der Stirnseitenbereich jedes Oberstabs in axialer Richtung geradlinig verlaufend ausgebildet und der Stirnseitenbereich jedes Unterstabs zweifach gekröpft ausgebildet, wobei das freie Ende jedes Oberstabs und jedes Unterstabs in axiale Richtung ragen. Insbesondere ragen alle Oberstäbe und Unterstäbe auf der wenigstens einen Stirnseite in axialer Richtung gleich weit aus den Nuten heraus. Dadurch liegen die Stabenden der Ober- und Unterstäbe in einer gemeinsamen Ebene, so dass die Verbindung mittels eines Verbindungselements sehr einfach gestaltet werden kann.

In einer anderen möglichen Ausführungsform der Wicklung sind an wenigstens einer Stirnseite des Blechpakets der Stirnseitenbereich jedes Oberstabs und der Stirnseitenbereich jedes Unterstabs einfach gekröpft ausgebildet, wobei das freie Ende jedes Oberstabs und jedes Unterstabs in radiale Richtung ragen. Insbesondere ragen auf der wenigstens einen Stirnseite die Oberstäbe in axialer Richtung weiter aus den Nuten heraus als die Unterstäbe.

Eine weitere Ausgestaltung der Erfindung sieht vor, dass je zwei benachbarte Statorsegmente mittels einer Nut-FederVerbindung form- und kraftschlüssig miteinander verbunden sind. Bei der Nut-Federverbindung ist insbesondere eine Fuge an einer Längsseite eines Statorsegments vorgesehen, in die ein Spund, welcher an einer Längsseite des benachbarten Statorsegments angeordnet ist, formschlüssig eingreift. Eine solche Verbindung ermöglicht nicht nur ein einfaches formschlüssiges Ineinanderschieben der Statorsegmente, sondern auch eine mechanisch stabile Verbindung aufgrund einer ausreichend hohen Scherfestigkeit, die ein Spund in einer Nut-Feder-Verbindung in bekannter Weise aufweist.

Eine erfindungsgemäße rotierende elektrische Maschine weist einen erfindungsgemäßen Stator auf. Die Vorteile einer derartigen rotierenden elektrischen Maschine ergeben sich aus den oben genannten Vorteilen des erfindungsgemäßen Stators.

Bei einem erfindungsgemäßen Verfahren zur Montage eines erfindungsgemäßen Stators werden in jeder Nut jedes Statorsegments ein Oberstab und ein Unterstab angeordnet. Jeder Oberstab wird mit einem ihm zugeordneten Unterstab mittels eines Verbindungselements verbunden, sofern der Oberstab und der Unterstab in Nuten desselben Statorsegments angeordnet sind. Anschließend wird jedes Statorsegment mit den in seinen Nuten angeordneten Oberstäben und Unterstäben und den Verbindungselementen, die jeweils einen Oberstab und einen Unterstab des Statorsegments verbinden, imprägniert und damit isoliert. Die imprägnierten Statorsegmente werden dann form- oder kraftschlüssig miteinander verbunden. Nach dem Verbinden der imprägnierten Statorsegmente wird mindestens ein Oberstab eines Statorsegments mit einem Unterstab eines benachbarten Statorsegments mittels eines Verbindungselements elektrisch leitend verbunden.

Das Verfahren ermöglicht eine einfache Montage des Stators mit einer variierbaren Zahl an Statorsegmenten, insbesondere an einem Einsatzort der rotierenden elektrischen Maschine, da die Wicklung derart ausgebildet ist, dass alle Nuten bereits vor dem Imprägnieren mit Wicklungselementen gefüllt sind. Somit kann das Verfahren auch für sehr große Maschinen mit vielen Statorsegmenten angewendet werden.

In einer Ausgestaltung des Verfahrens wird jedes Verbindungselement mit dem freien Ende eines Oberstabs und dem freien Ende eines Unterstabs verbunden, insbesondere verlötet. Dies ermöglicht eine kostengünstige, mechanisch stabile und elektrisch leitende Verbindung.

Eine weitere Ausgestaltung des Verfahrens sieht vor, dass für jedes Verbindungselement, das einen Oberstab und einen Unterstab zweier benachbarter Statorsegmente verbindet, ein Verbindungsbereich zwischen dem Verbindungselement und dem Oberstab und ein Verbindungsbereich zwischen dem Verbindungselement und dem Unterstab elektrisch isoliert werden. Das Verfahren ermöglicht somit eine nahezu vollgetränkte Imprägnierung der Wicklung, da nur Verbindungsstellen der nach dem Verbinden der imprägnierten Statorsegmente angeordneten Verbindungselemente einzeln isoliert werden. Da hierbei nur ein kleiner Teil der Wicklung nachträglich isoliert wird, kann ein Montageaufwand gegenüber konventionellen Statoren, bei denen beispielsweise jedes Wicklungssegment einzeln isoliert wird, reduziert werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch eine Seitenansicht einer rotierenden elektrischen Maschine,
- FIG 2: schematisch zwei Statorsegmente während der Montage in einer Seitenansicht,
- FIG 3: schematisch eine perspektivische Teilansicht eines Statorsegments mit einer Zweischicht-Stabwicklung in einer ersten Ausführungsform,
- FIG 4: schematisch eine perspektivische Ansicht eines Wicklungssegments der Zweischicht-Stabwicklung gemäß der ersten Ausführungsform,
- FIG 5: schematisch eine perspektivische Teilansicht zwei miteinander verbundener Statorsegmente mit der Zweischicht-Stabwicklung gemäß der ersten Ausführungsform,
- FIG 6: schematisch eine perspektivische Teilansicht eines Statorsegments mit einer Zweischicht-Stabwicklung in einer zweiten Ausführungsform,
- FIG 7: schematisch eine perspektivische Ansicht eines Wicklungssegments der Zweischicht-Stabwicklung gemäß der zweiten Ausführungsform und
- FIG 8: schematisch eine perspektivische Teilansicht zwei miteinander verbundener Statorsegmente mit der Zweischicht-Stabwicklung gemäß der zweiten Ausführungsform.

Einander entsprechende Teile sind in allen Figuren mit den gleichen Bezugszeichen versehen.

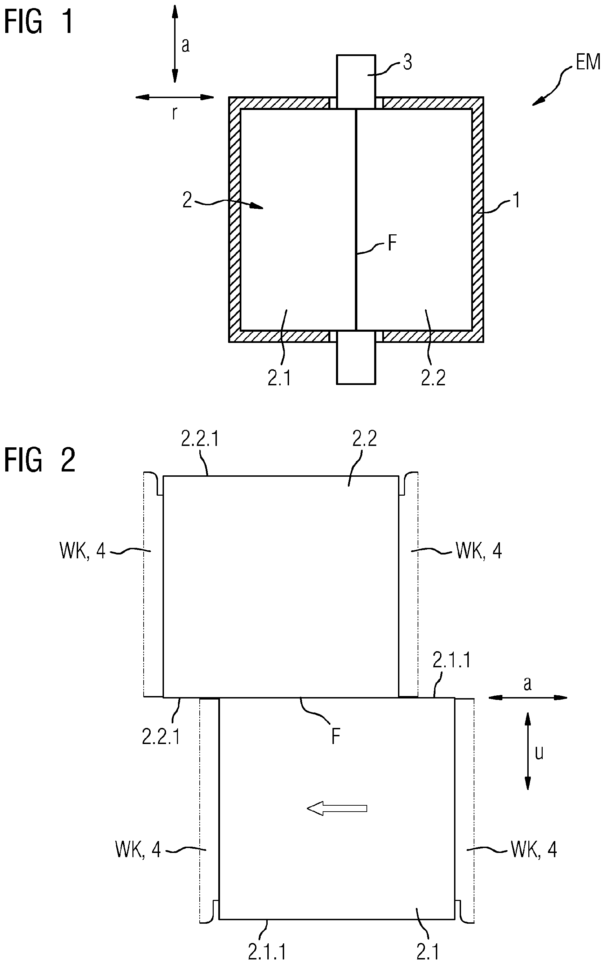

Figur 1 zeigt schematisch eine Seitenansicht einer rotierenden elektrischen Maschine EM in vereinfachter Darstellung.

Die rotierende elektrische Maschine EM ist beispielsweise ein Synchronmotor und umfasst ein Gehäuse 1, in dem ein Stator 2 drehfest gegenüber dem Gehäuse 1 angeordnet ist. Der Stator 2 umfasst mehrere Statorsegmente 2.1, 2.2, die jeweils als ein Blechpaket ausgebildet und zur Bildung eines hohlzylindrischen Stators 2 an Fügestellen F miteinander verbunden sind, wobei sich die Fügestellen F in eine axiale Richtung a erstrecken. Die Anzahl der Statorsegmente 2.1, 2.2 (im gezeigten Ausführungsbeispiel sind zwei Statorsegmente 2.1, 2.2 gezeigt) kann dabei in Abhängigkeit eines Einsatzortes der rotierenden elektrischen Maschine EM variieren.

Die rotierende elektrische Maschine EM umfasst weiterhin einen nicht näher dargestellten Rotor mit einer Rotorwelle 3, wobei der Rotor gegenüber dem Stator 2 drehbar in dem Gehäuse 1 gelagert ist. Im gezeigten Ausführungsbeispiel wird der Rotor vom Stator 2 umgeben, wobei ein Luftspalt zwischen dem Stator 2 und dem Rotor angeordnet ist. Alternativ kann die rotierende elektrische Maschine EM auch derart ausgebildet sein, dass der Rotor den Stator 2 umgibt.

Figur 2 zeigt schematisch zwei Statorsegmente 2.1, 2.2 während der Montage in einer Seitenansicht.

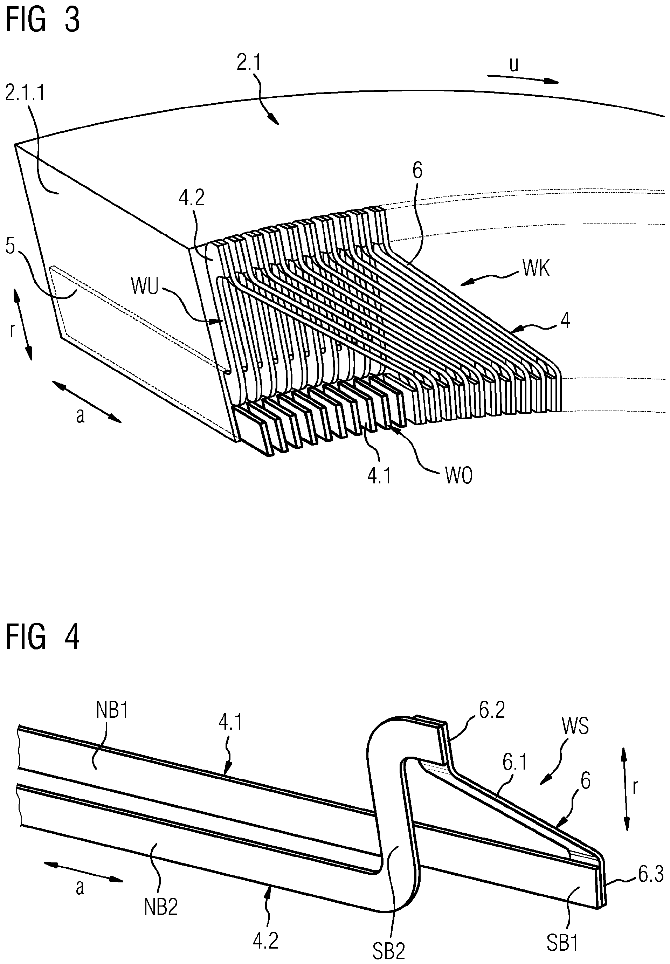

Der Stator 2 ist als Träger einer elektrisch leitenden Wicklung 4 ausgebildet, welche im gezeigten Ausführungsbeispiel zwei stirnseitig aus den Statorsegmenten 2.1, 2.2 herausragende Wicklungsköpfe WK umfasst. Zur Aufnahme der elektrischen Wicklung 4 weisen die Statorsegmente 2.1, 2.2 jeweils eine Mehrzahl von Nuten 5 (siehe Figur 3) auf, welche auch als Blechpaketnuten bekannt sind und in Figur 3 näher beschrieben werden.

Zum Verbinden der gezeigten Statorsegmente 2.1, 2.2 weist eine Längsseite 2.1.1 eines Statorsegments 2.1 eine nicht näher dargestellte Fuge auf, die zur Herstellung einer form- und kraftschlüssigen Verbindung, insbesondere einer Nut-FederVerbindung, mit dem anderen Statorsegment 2.2 vorgesehen ist. Eine Längsseite 2.2.1 des anderen Statorsegments 2.2 weist dazu einen nicht näher gezeigten Spund auf, welcher formschlüssig in die Fuge eingreift.

Wie das vorliegende Ausführungsbeispiel zeigt, werden die Statorsegmente 2.1, 2.2 durch Ineinanderschieben der Längsseiten 2.1.1, 2.2.1 in axialer Richtung a form- und kraftschlüssig miteinander verbunden. Zur Fixierung der Nut-FederVerbindung können weitere nicht dargestellte Befestigungselemente vorgesehen sein.

Die Segmentierung des Stators 2 ermöglicht den Bau großer elektrischer Maschinen mit großen Blechpaketlängen. Beispielsweise werden vor der Montage des Stators 2 die einzelnen Statorsegmente 2.1, 2.2 mit der Wicklung 4 versehen und anschließend imprägniert, so dass Hohlräume in der Wicklung 4 mit einem Isolationsmaterial geschlossen und abgedichtet werden. Die einzelnen mit der Wicklung 4 versehenen Statorsegmente 2.1, 2.2 können dann an einem Einsatzort der rotierenden elektrischen Maschine EM wie oben beschrieben zusammengesetzt werden. Damit dies auf einfache Art und Weise möglich ist, wird eine Wicklung 4 vorgeschlagen, die ein axiales Ineinanderschieben der Statorsegmente 2.1, 2.2 ermöglicht. Im Folgenden werden zwei mögliche Ausführungsformen einer solchen Wicklung 4 beschrieben.

Figur 3 zeigt schematisch eine perspektivische Teilansicht eines Statorsegments 2.1 mit der Wicklung 4 in einer ersten Ausführungsform.

Die Wicklung 4 ist eine Zweischicht-Stabwicklung und umfasst eine Wicklungsoberlage WO und eine Wicklungsunterlage WU. Die Wicklungsoberlage WO umfasst eine Mehrzahl von elektrisch leitfähigen Oberstäben 4.1. und die Wicklungsunterlage WU umfasst eine Mehrzahl von elektrisch leitfähigen Unterstäben 4.2. Die Oberstäbe 4.1 und Unterstäbe 4.2 weisen jeweils in nicht näher gezeigter Weise parallel zueinander angeordnete Teilleiter auf, welche beispielsweise isoliertes Kupfer umfassen und in einem Nutseitenbereich NB sowie in einem Stirnseitenbereich SB (siehe Figur 4) gegeneinander verdrillt oder parallel zueinander verlaufend und damit ohne Verdrillung ausgebführt sind.

Die Ober- und Unterstäbe 4.1 und 4.2 sind in den Nuten 5 des Statorsegments 2.1 angeordnet, wobei in jeweils einer Nut 5 ein Oberstab 4.1 und ein Unterstab 4.2 angeordnet sind. Insbesondere sind in jeder Nut 5 der Oberstab 4.1 und der Unterstab 4.2 in einer radialen Richtung r durch einen Abstandshalter getrennt und übereinander angeordnet. Die Nuten 5 sind in einer inneren Mantelfläche der Statorsegmente 2.1, 2.2 eingebracht und entlang einer Umfangsrichtung u nebeneinander angeordnet. Dabei erstrecken sich die Nuten 5 jeweils in axialer Richtung a von einer Stirnseite des Statorsegments 2.1 zur gegenüberliegenden Stirnseite des Statorsegments 2.2. Im gezeigten Ausführungsbeispiel ist eine der Nuten 5 mit gestrichelten Linien angedeutet. An den Stirnseiten ragen die Ober- und Unterstäbe 4.1, 4.2 jeweils aus der Nut 5 in axialer Richtung a heraus und bilden dabei die Wicklungsköpfe WK aus, die in Figur 2 gezeigt sind.

Des Weiteren sind die Ober- und Unterstäbe 4.1, 4.2 jeweils mittels eines Verbindungselements 6 elektrisch leitend miteinander verbunden. Das Verbindungselement 6 verbindet dabei einen Oberstab 4.1 mit einem in Umfangsrichtung u zu diesem versetzten Unterstab 4.2, wie es im vorliegenden Ausführungsbeispiel gezeigt ist. Das Verbindungselement 6 ist bügelartig ausgebildet und verläuft aufgrund der Versetzung der miteinander zu verbindenden Ober- und Unterstäbe 4.1, 4.2 tangential zur Umfangsrichtung u.

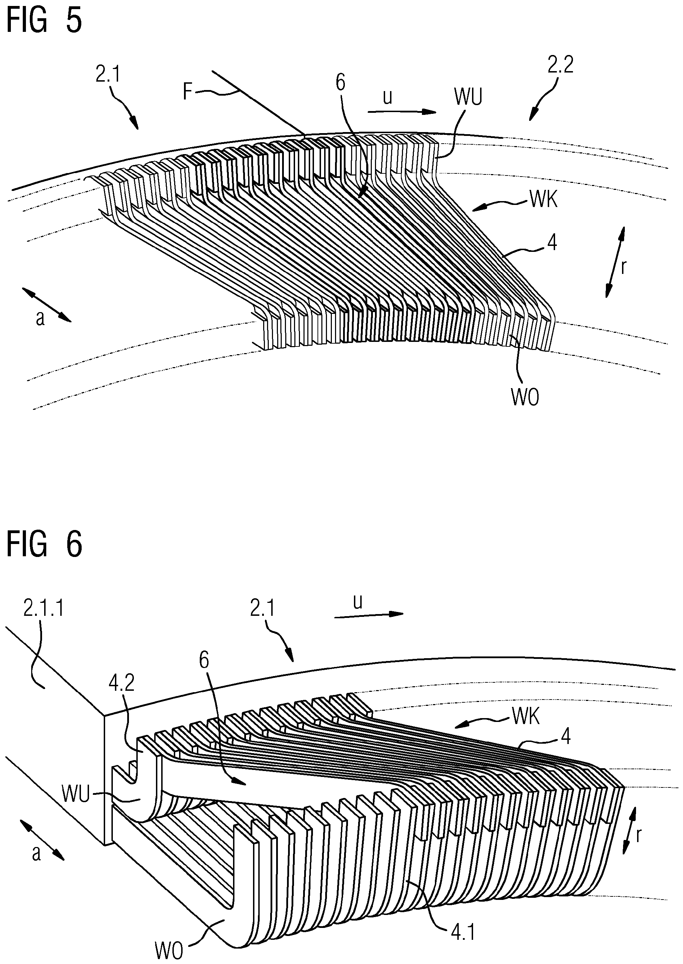

Die Oberstäbe 4.1, welche in einem Bereich einer Segmentgrenze des Statorsegments 2.1, d. h. in einem Bereich an und nahe der Längsseite 2.1.1, angeordnet sind, sind in einem unmontierten Zustand des Stators 2 nicht mit einem Verbindungselement 6 verbunden, da diese jeweils zur elektrischen Verbindung mit einem Unterstab 4.2 des anderen Statorsegments 2.2 vorgesehen sind. Diese Ober- und Unterstäbe 4.1, 4.2 werden erst nach dem Zusammensetzen der Statorsegmente 2.1, 2.2 mittels des Verbindungselements 6 elektrisch leitend miteinander verbunden, wie es Figur 5 beispielhaft zeigt. Dies ermöglicht eine einfache Verbindung der Statorsegmente 2.1, 2.2 in axialer Richtung a, da der Wicklungskopf WK nicht über die Längsseite 2.1.1 hinausragt.

Figur 4 zeigt schematisch eine perspektivische Ansicht eines Wicklungssegments WS gemäß der ersten Ausführungsform.

Das Wicklungssegment WS umfasst einen Oberstab 4.1, einen Unterstab 4.2 und ein Verbindungselement 6.

In der ersten Ausführungsform sind ein Nutenbereich NB1 und ein Stirnseitenbereich SB1 des Oberstabs 4.1 jeweils gerade ausgeführt. Der Nutenbereich NB1 ist der Bereich des Oberstabs 4.1, welcher innerhalb der Nut 5 angeordnet ist. Der Stirnseitenbereich SB1 ragt aus der Nut 5 heraus und ist Bestandteil des Wicklungskopfes WK. Insbesondere ragt der Stirnseitenbereich SB1 in axialer Richtung a aus der Nut 5 heraus, wie es Figur 3 zeigt. Somit verläuft der gesamte Oberstab 4.1 in axialer Richtung a.

Ein Nutenbereich NB2 des Unterstabs 4.2 ist ebenfalls gerade. Der Unterstab 4.2 ragt in axialer Richtung a aus der Nut 5 heraus, weist jedoch einen doppelgekröpften Stirnseitenbereich SB2 auf. Dadurch ist der Stirnseitenbereich SB2 in drei Bereiche aufgeteilt, die zueinander abgewinkelt sind.

Ein erster, unmittelbar aus der Nut 5 heraus ragender Bereich erstreckt sich in axialer Richtung a, ein zweiter Bereich ist zum ersten Bereich abgewinkelt und erstreckt sich in radialer Richtung r. Der Stirnseitenbereich SB2 ist hier somit radial nach außen gekröpft. Ein dritter Bereich ist vom zweiten Bereich abgewinkelt und erstreckt sich wieder in axiale Richtung a. Der dritte Bereich umfasst ein freies Ende des Unterstabs 4.2. Das freie Ende des Unterstabs 4.2 ist dabei in axialer Richtung a in der gleichen Ebene angeordnet wie ein freies Ende des Oberstabs 4.1. Mit anderen Worten: Der Oberstab 4.1 und der Unterstab 4.2 weisen die gleiche axiale Länge auf.

Das Verbindungselement 6 umfasst ein Metall oder eine Metalllegierung, z. B. massives Kupfer. Wie bereits erwähnt, ist das Verbindungselement 6 bügelartig ausgebildet. Dabei umfasst das Verbindungselement 6 einen rampenförmigen Schrägabschnitt 6.1, welcher zwei zu diesem abgewinkelte Enden 6.2, 6.3 miteinander verbindet.

Ein Ende 6.2 des Verbindungselements 6 erstreckt sich dabei im montierten Zustand des Stators 2 in radialer Richtung r nach außen (siehe Figur 3). Insbesondere liegt hierbei eine Seitenfläche des Endes 6.2 auf einer Seitenfläche des freien Endes des Unterstabs 4.2 an. Ein anderes Ende 6.3 des Verbindungselements 6 erstreckt sich im montierten Zustand des Stators 2 in radialer Richtung r nach innen (siehe Figur 3). Insbesondere liegt hierbei eine Seitenfläche des Endes 6.3 auf einer Seitenfläche des freien Endes des Oberstabs 4.1 an.

Der Schrägabschnitt 6.1 verläuft im montierten Zustand des Stators 2 ausgehend von dem einem Ende 6.2 radial nach innen, dabei jedoch tangential zur Umfangsrichtung u (siehe Figur 3). Mittels des mit dem Schrägabschnitt 6.1 ausgebildeten Verbindungselements 6 können die in Umfangsrichtung u zueinander versetzten Ober- und Unterstäbe 4.1, 4.2 jeweils auf einem möglichst kurzen Weg elektrisch leitend miteinander verbunden werden.

Die Enden 6.2, 6.3 des Verbindungselements 6 können mit den freien Enden des Oberstabs 4.1 und des Unterstabs 4.2 jeweils verlötet oder mittels einer anderen elektrisch leitfähigen Verbindung miteinander verbunden sein.

Figur 5 zeigt schematisch eine perspektivische Teilansicht zwei miteinander verbundener Statorsegmente 2.1, 2.2 mit der Wicklung 4 gemäß der ersten Ausführungsform.

Die gezeigten Statorsegmente 2.1, 2.2 sind an der Fügestelle F miteinander verbunden und umfassen die Wicklung 4, welche nun zusätzlich auch die Verbindungselemente 6 umfasst, die die Oberstäbe 4.1 des einen Statorsegments 2.1 mit den Unterstäben 4.2 des anderen Statorsegments 2.2 elektrisch leitend verbinden. Diese Verbindungselemente 6 werden erst nach dem Zusammensetzen der Statorsegmente 2.1, 2.2, also beispielsweise an einem Einsatzort der rotierenden elektrischen Maschine EM, angeordnet und mit den entsprechenden Ober- und Unterstäben 4.1, 4.2 verbunden. Verbindungsstellen zwischen den Verbindungselementen 6 und den Ober- und Unterstäben 4.1, 4.2 werden in bekannter Weise elektrisch isoliert.

Möglich ist auch, dass die nicht an der Segmentgrenze liegenden Oberstäbe 4.1 und die entsprechend zugeordneten Verbindungselemente 6 einteilig ausgeführt werden, indem der Oberstab 4.1 im Stirnseitenbereich um 90 Grad radial nach außen gebogen und im weiteren Verlauf entsprechend dem Verbindungselement 6 geformt wird. Damit kann eine Anzahl der Verbindungstellen reduziert werden.

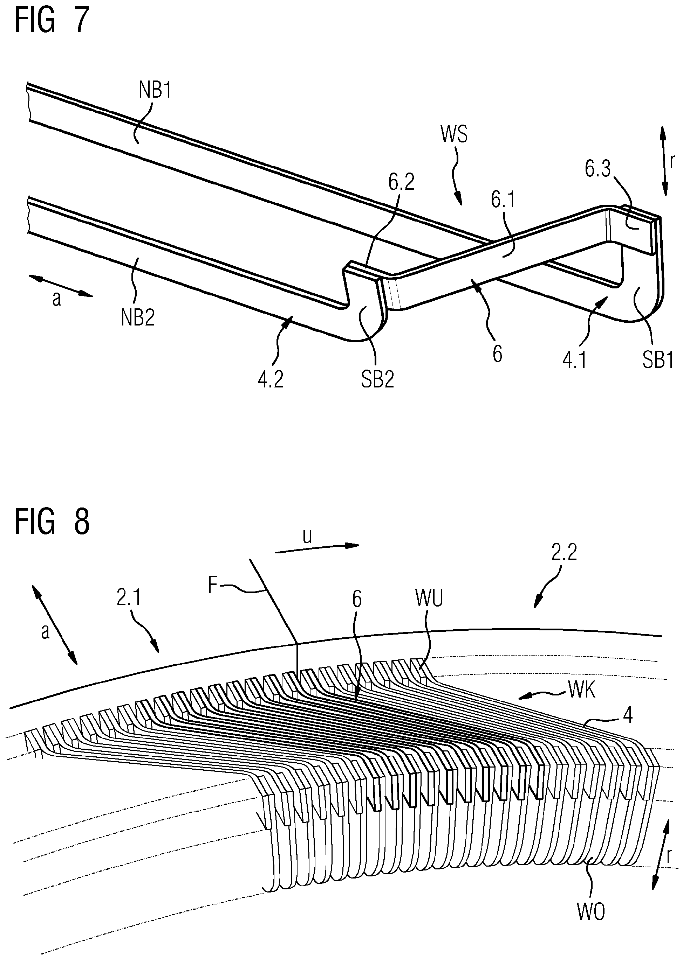

Figur 6 zeigt schematisch eine perspektivische Teilansicht eines Statorsegments 2.1 mit einer Wicklung 4 gemäß einer zweiten Ausführungsform. Figur 7 zeigt schematisch eine perspektivische Einzelansicht eines Wicklungssegments WS gemäß der zweiten Ausführungsform.

Die Wicklung 4 ist hierbei ebenfalls eine Zweischicht-Stabwicklung und umfasst die Wicklungsoberlage WO und Wicklungsunterlage WU gemäß der Beschreibung aus Figur 3.

In der zweiten Ausführungsform sind die Nutenbereiche NB1, NB2 der Oberstäbe 4.1 und Unterstäbe 4.2 jeweils gerade ausgeführt und verlaufen in axialer Richtung a. Die Stirnseitenbereiche SB1, SB2 der Oberstäbe 4.1 und Unterstäbe 4.2 sind jeweils einfach gekröpft, insbesondere radial nach außen gekröpft. Dadurch sind die Stirnseitenbereiche SB1, SB2 jeweils in zwei Bereiche aufgeteilt, die zueinander abgewinkelt sind.

Ein erster, unmittelbar aus der Nut 5 heraus ragender Bereich erstreckt sich in axialer Richtung a. Ein zweiter Bereich ist zum ersten Bereich abgewinkelt und erstreckt sich in radialer Richtung r nach oben. Der zweite Bereich umfasst das freie Ende des Oberstabs 4.1 bzw. des Unterstabs 4.2. Hierbei weisen der Oberstab 4.1 und der Unterstab 4.2 jedoch unterschiedliche axiale Längen auf. Ein axialer Versatz der freien Enden ist dabei so dimensioniert, dass eine vorgeschriebene Luftstrecke zwischen benachbarten Verbindungselementen 6 eingehalten wird.

Das Verbindungselement 6 ist hierbei ebenfalls bügelartig ausgebildet. Dabei umfasst das Verbindungselement 6 den rampenförmigen Schrägabschnitt 6.1, welcher die beiden abgewinkelten Enden 6.2, 6.3 miteinander verbindet.

Das eine Ende 6.2 des Verbindungselements 6 erstreckt sich dabei im montierten Zustand des Stators 2 in axialer Richtung a nach unten (siehe Figur 6). Insbesondere liegt hierbei eine Seitenfläche des Endes 6.2 auf einer Seitenfläche des freien Endes des Unterstabs 4.2 an. Das andere Ende 6.3 des Verbindungselements 6 erstreckt sich im montierten Zustand des Stators 2 in axialer Richtung a nach oben (siehe Figur 6). Insbesondere liegt hierbei eine Seitenfläche des Endes 6.3 auf einer Seitenfläche des freien Endes des Oberstabs 4.1 an.

Der Schrägabschnitt 6.1 verläuft im montierten Zustand des Stators 2 ausgehend von dem einen Ende 6.2 axial nach oben und tangential zur Umfangsrichtung u (siehe Figur 6). Auch hierbei können die in Umfangsrichtung u zueinander versetzten Ober- und Unterstäbe 4.1, 4.2 mittels des mit dem Schrägabschnitt 6.1 ausgebildeten Verbindungselements 6 jeweils auf einem möglichst kurzen Weg elektrisch leitend miteinander verbunden werden.

Figur 8 zeigt schematisch eine perspektivische Teilansicht zwei miteinander verbundener Statorsegmente 2.1, 2.2 mit der Wicklung 4 gemäß der zweiten Ausführungsform.

Die gezeigten Statorsegmente 2.1, 2.2 sind an der Fügestelle F miteinander verbunden und umfassen die Wicklung 4, welche nun analog zur ersten Ausführungsform zusätzlich die Verbindungselemente 6 umfasst, die die Oberstäbe 4.1 des einen Statorsegments 2.1 mit den Unterstäben 4.2 des anderen Statorsegments 2.2 elektrisch leitend verbinden. Diese Verbindungselemente 6 werden erst nach dem Zusammensetzen der Statorsegmente 2.1, 2.2, also beispielsweise an einem Einsatzort der rotierenden elektrischen Maschine EM, angeordnet und mit den entsprechenden Ober- und Unterstäben 4.1, 4.2 verbunden. Verbindungsstellen zwischen den Verbindungselementen 6 und den Ober- und Unterstäben 4.1, 4.2 werden in bekannter Weise elektrisch isoliert.

Bei dem erfindungsgemäßen Stator 2 sind die Wicklungsköpfe WK gemäß der ersten oder zweiten Ausführungsform ausgebildet. Denkbar ist auch, dass einer der Wicklungsköpfe WK gemäß der ersten Ausführungsform und der andere Wicklungskopf WK gemäß der zweiten Ausführungsform ausgebildet ist. Die Wahl der Ausführungsform kann beispielsweise nach Bauraum und einer Einbausituation erfolgen.

In einem weiteren alternativen Ausführungsbeispiel ist der Stator 2 radial innen und der Rotor radial außen angeordnet. Hierbei sind die Nuten 5 nicht in der inneren Mantelfläche, sondern in einer äußeren Mantelfläche eingebracht. Die zuvor beschriebenen Ausführungsformen für die Wicklung 4 können analog auch für eine rotierende elektrische Maschine EM mit radial innen angeordnetem Stator 2 angewendet werden, wobei die Stirnseitenbereiche SB1, SB2 radial nach innen gekröpft sind.

Bei einer möglichen alternativen Ausgestaltungsvariante des Verbindungselements 6 unterscheidet sich ein Verhältnis von Höhe zu Breite einer Querschnittsfläche des Verbindungselements 6 von einem Verhältnis von Höhe zu Breite einer Querschnittsfläche des Oberstabs 4.1 bzw. Unterstabs 4.2, wobei die Querschnittsflächen in etwa gleich groß sind. Mittels Abmessung der Querschnittsfläche des Verbindungselements 6 kann ein Bauraumbedarf des Wicklungskopfes WK in axialer Richtung a und radialer Richtung r beeinflusst werden. Des Weiteren können die Oberstäbe 4.1 und Unterstäbe 4.2 auch jeweils mittels zweier Verbindungselemente 6 elektrisch leitend miteinander verbunden werden. Ferner können die Verbindungselemente 6 auch jeweils als Dreiecksbügel ausgebildet sein (nicht gezeigt).

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Stator (2) für eine rotierende elektrische Maschine (EM), der Stator (2) umfassend
- ein Blechpaket, das eine Mehrzahl von miteinander verbundenen Statorsegmenten (2.1, 2.2) aufweist, die sich jeweils von einer ersten Stirnseite zu einer der ersten Stirnseite gegenüberliegenden zweiten Stirnseite des Blechpakets erstrecken, und
- eine elektrisch leitende Wicklung (4), welche als eine Zweischicht-Stabwicklung ausgebildet ist und welche eine Wicklungsoberlage (WO) und eine Wicklungsunterlage (WU) aufweist, wobei die Wicklungsoberlage (WO) eine Mehrzahl von elektrisch leitfähigen Oberstäben (4.1) und die Wicklungsunterlage (WU) eine Mehrzahl von elektrisch leitfähigen Unterstäben (4.2) umfasst,
- wobei jedes Statorsegment (2.1, 2.2) eine Mehrzahl von sich in eine axiale Richtung (a) erstreckenden Nuten (5) aufweist,
- wobei in jeder Nut (5) ein Oberstab (4.1) und ein Unterstab (4.2) in einer radialen Richtung (r) nebeneinander angeordnet sind und an jeder Stirnseite des Blechpakets mit jeweils einem Stirnseitenbereich (SB1, SB2) aus der Nut (5) in axialer Richtung (a) heraus ragen, und
- wobei mindestens ein Oberstab (4.1) eines Statorsegments (2.1) mit einem Unterstab (4.2) eines benachbarten Statorsegments (2.2) mittels eines Verbindungselements (6) elektrisch leitend verbunden ist.

2. Stator (2) nach Anspruch 1, wobei jedes Verbindungselement (6) ein freies Ende eines Oberstabs (4.1) mit einem freien Ende eines in Umfangsrichtung (u) zu diesem Oberstab (4.1) versetzten Unterstabs (4.2) elektrisch leitend verbindet.

3. Stator (2) nach Anspruch 2, wobei
- jedes Verbindungselement (6) einen Schrägabschnitt (6.1) aufweist, welcher zwei zu diesem abgewinkelte Enden (6.2, 6.3) miteinander verbindet, und
- das eine Ende (6.2) jedes Verbindungselements (6) mit dem freien Ende eines Unterstabs (4.2) und das andere Ende (6.3) jedes Verbindungselements (6) mit dem freien Ende eines Oberstabs (4.1) elektrisch leitend verbunden ist.

4. Stator (2) nach einem der vorhergehenden Ansprüche, wobei an wenigstens einer Stirnseite des Blechpakets
- der Stirnseitenbereich (SB1) jedes Oberstabs (4.1) in axialer Richtung (a) geradlinig verlaufend ausgebildet ist,
- der Stirnseitenbereich (SB2) jedes Unterstabs (4.2) zweifach gekröpft ausgebildet ist, und
- das freie Ende jedes Oberstabs (4.1) und jedes Unterstabs (4.2) in axiale Richtung (a) ragen.

5. Stator (2) nach Anspruch 4, wobei alle Oberstäbe (4.1) und Unterstäbe (4.2) auf der wenigstens einen Stirnseite in axialer Richtung (a) gleich weit aus den Nuten (5) heraus ragen.

6. Stator (2) nach einem der Ansprüche 1 bis 3, wobei an wenigstens einer Stirnseite des Blechpakets
- der Stirnseitenbereich (SB1) jedes Oberstabs (4.1) und der Stirnseitenbereich (SB2) jedes Unterstabs (4.2) einfach gekröpft ausgebildet sind und
- das freie Ende jedes Oberstabs (4.1) und jedes Unterstabs (4.2) in radiale Richtung (r) ragen.

7. Stator (2) nach Anspruch 6, wobei die Oberstäbe (4.1) in axialer Richtung (a) weiter als die Unterstäbe (4.2) aus den Nuten (5) heraus ragen.

8. Rotierende elektrische Maschine (EM), welche einen Stator (2) gemäß einem der vorhergehenden Ansprüche aufweist.

9. Verfahren zur Montage eines Stators (2) gemäß einem der Ansprüche 1 bis 7, wobei
- in jeder Nut (5) jedes Statorsegments (2.1, 2.2) ein Oberstab (4.1) und ein Unterstab (4.2) angeordnet werden,
- jeder Oberstab (4.1) mit einem ihm zugeordneten Unterstab (4.2) mittels eines Verbindungselements (6) verbunden wird, sofern der Oberstab (4.1) und der Unterstab (4.2) in Nuten (5) desselben Statorsegments (2.1, 2.2) angeordnet sind,
- jedes Statorsegment (2.1, 2.2) mit den in seinen Nuten (5) angeordneten Oberstäben (4.1) und Unterstäben (4.2) sowie den Verbindungselementen (6), die jeweils einen Oberstab (4.1) und einen Unterstab (4.2) des Statorsegments (2.1, 2.2) verbinden, imprägniert wird,
- die imprägnierten Statorsegmente (2.1, 2.2) form- oder kraftschlüssig miteinander verbunden werden und
- nach dem Verbinden der imprägnierten Statorsegmente (2.1, 2.2) mindestens ein Oberstab (4.1) eines Statorsegments (2.1) mit einem Unterstab (4.2) eines benachbarten Statorsegments (2.2) mittels eines Verbindungselements (6) elektrisch leitend verbunden wird.

10. Verfahren nach Anspruch 9, wobei jedes Verbindungselement (6) mit dem freien Ende eines Oberstabs (4.1) und dem freien Ende eines Unterstabs (4.2) verlötet wird.

11. Verfahren nach Anspruch 9 oder 10, wobei für jedes Verbindungselement (6), das einen Oberstab (4.1) und einen Unterstab (4.2) zweier benachbarter Statorsegmente (2.1, 2.2) verbindet, ein Verbindungsbereich zwischen dem Verbindungselement (6) und dem Oberstab (4.1) sowie ein Verbindungsbereich zwischen dem Verbindungselement (6) und dem Unterstab (4.2) elektrisch isoliert werden.
